Europäisches Patentamt

European Patent Office

Office européen des brevets

(19)

(11) Veröffentlichungsnummer: **0 207 260**
**B1**

(12) # EUROPÄISCHE PATENTSCHRIFT

(45) Veröffentlichungstag der Patentschrift: **22.11.90**

(51) Int. Cl.⁵: **F 16 H 59/10, F 16 H 63/44**

(21) Anmeldenummer: **86106418.6**

(22) Anmeldetag: **12.05.86**

(54) **Einhebelbedienung für ein Schaltgetriebe eines Gleiskettenfahrzeuges.**

(30) Priorität: **29.06.85 DE 3523381**

(43) Veröffentlichungstag der Anmeldung:
**07.01.87 Patentblatt 87/02**

(45) Bekanntmachung des Hinweises auf die
Patenterteilung:
**22.11.90 Patentblatt 90/47**

(84) Benannte Vertragsstaaten:
**DE FR GB IT NL SE**

(56) Entgegenhaltungen:
**DE-A-1 943 013**
**DE-A-2 341 459**
**DE-A-2 746 403**
**GB-A-1 215 451**
**GB-A-2 033 501**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **Jozefiak, Alfred**
**Schillerstrasse 66**
**D-7531 Kieselbronn (DE)**
Erfinder: **Rispeter, Siegfried**
**Uhlandstrasse 13**
**D-7122 Besigheim (DE)**

Courier Press, Leamington Spa, England.

**Beschreibung**

Die Erfindung bezieht sich auf eine Einhebelbedienung nach dem Oberbegriff des Anspruchs 1.

Es ist aus der DE—A—1943 013 eine Schalteinrichtung für ein Wechselgetriebe mit zwei Gangarten und Vorwärts- und Rückwärtsfahrgängen bekannt, bei der die Umschaltung der Gangarten und das Schalten der einzelnen Gangstufen jeweils über verschiedene Schalthebel erfolgt. Nachteilig bei dieser Einrichtung ist, daß zum Schalten eine erhöhte Aufmerksamkeit erforderlich ist, damit bei einem Wechsel der Gangart von z.B. Straßen- auf Geländegang der Gangschalthebel auch in einer neutralen Stellung steht. Desweiteren ist aus der DE—A—2341 459 ein Gang-Wählhebel mit dem in Oberbegriff des Anspruchs 1 genannten Merkmalen bekannt, der in einem U-förmigen Schaltbild geführt wird, wobei die eine Schaltgasse für die Vorwärtsgänge und die weitere Schaltgasse für die Rückwärtsgänge ausgelegt ist. Beide Schaltgassen sind nebeneinanderliegend angeordnet und über eine Quergasse miteinander verbunden. Ferner ist aus der GB—A—1215 451 ein Gangwählhebel für ein automatisches Getriebe bekannt, der in einer Kreuz-Schaltgasse geführt ist und mit dem einerseits Fahrgänge geschaltet werden und mit dem andererseits Fahrzeugeinrichtungen, wie z.B. türen betätigt werden.

Hiervon ausgehend liegt die Aufgabe der vorliegenden Erfindung darin, eine Einhebelbedienung zu schaffen mit der eine Fahlbedienung eines Getriebes bzw. eines Vorgeleges ausgeschlossen wird und die einen einfachen Aufbau bei hoher Betriebssicherheit aufweist und welche verschiedenen Getriebeausführungen in einfacher Weise anpassbar ist.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die durch die Erfindung hauptsächlich erzielten Vorteile bestehen darin, daß mit der Einhebelbedienung eine Fahlbedienung eines Schaltgetriebes ausgeschlossen wird. Über die mit dem Schalthebel verbundene Stellvorrichtung werden die von den Schaltgassen vorgegebenen Schalthebelbewegungen in eine schwenkende und eine geradlinige Steuerbewegung zum Schalten des Getriebes und des Vorgeleges umgesetzt. Durch die Ausbildung der Stellvorrichtung ist jeweils nur eine Steuerbewegung zur Zeit möglich, so daß keine Fehlschaltung durchgeführt werden kann. Zum Umschalten von einer Gangert in eine andere Gangart, z.B. vom Straßengang in den Geländegang, wird der Schalthebel durch die die beiden Längsschaltgassen miteinander verbindende Quergasse bewegt, der das Schaltgetriebe in eine Normal- bzw. in eine Leerlaufstellung schaltet, so daß eine Umschaltung des Vorgeleges zum Wechsel der Gangart über das Schiebeelement der Stellvorrichtung erfolgt. Eine Schaltung der Vorwärts- und Rückwärtsgangstufen ist während des Wechsels der Gangarten somit ausgeschlossen.

Ein Ausführungsbeispiel der Erfindung ist in der Zeichnung dargestellt und wird im folgenden näher beschrieben.

Es zeigen:

Fig. 1 eine schematische Darstellung der Einhebelbedienung eines Schaltgetriebes mit Getriebeautomat und Vorgelege in Draufsicht, und

Fig. 2 eine schaubildliche Darstellung einer vom Schalthebel steuerbaren Stellvorrichtung.

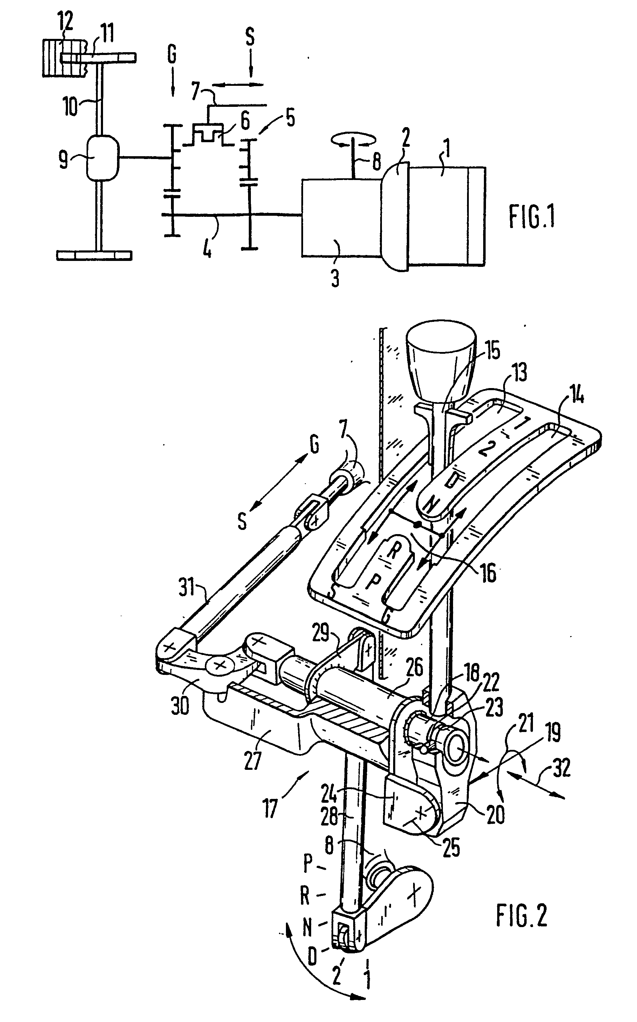

Fig. 1 zeigt schematisch den Aufbau der Antriebseinheit für ein Gleiskettenfahrzeug. Durch eine Brennkraftmaschine 1 wird über eine Kurbelwelle ein Wandler 2 und über diesen ein automatisches Schaltgetriebe 3 angetrieben. Mit einer Abtriebswelle 4 des Getriebes 3 steht ein Vorgelege 5 im Wirkverbindung. Das Vorgelege 5 ist mittels eine in Pfeilrichtung verschiebbaren Schaltmuffe 6 in einen Geländegang G und einen Straßengang S schaltbar, wozu eine Schaltstange 7 dient. Die einzelnen Gangstufen des Getriebes sind mittels einer Schaltwelle 8 ansteuerbar, die entsprechend der angedeuteten Pfeilrichtung drehbar ist. Das Vorgelege 5 wirkt auf ein Differential 9, von dem über Wellen 10 die Antriebsräder 11 der Gleisketten 12 angetrieben werden.

Die Einhebelbedienung umfaßt im wesentlichen einen in Schaltgassen 13, 14 zwangsgeführten Schalthebel 15. Die eine Schaltgasse 13 umfaßt die Gangart "Straße" mit den entsprechenden Vorwärts- und Rückwärtsgängen und die andere Schaltgasse 14 weist die Gangart "Gelande" mit den entsprechenden Vorwärts- und Rückwärtsgängen auf. Zwischen beiden Schaltgassen 13 und 14 ist eine Quergasse 16 vorgesehen, die eine Querverschiebung des Schalthebels 15 bei neutraler Stellung N des Getriebes 3 ermöglicht.

Mit dem Schalthebel 15 ist eine Stellvorrichtung 17 verbunden, die ein mit einem Schiebeelement 18 verbundenes Schwenkelement 19 umafßt. Dieses ist endseitig des Schalthebels 15 befestigt und besteht aus einem Steuerglied 20, das drehbar in Pfeilrichtung 21 auf dem Schiebeelement 18 gehalten ist. Hierzu ist das Schiebeelement 18 als Welle ausgeführt und in einer Bohrung des Steuergliedes 20 angeordnet. Über einen Zapfen 22, der in eine Führungsnut 23 des Schiebeelements 18 eingreift, ist das Steuerglied auf dem Schiebeelement drehbar und axial unverrückbar gehalten.

Das Steuerglied 20 ist in einer Konsole 24 um eine horizontale Achse 25 verschwenkbar angelenkt. Die Konsole 24 ist mit einer Hohlwelle 26 verbunden, die sich in einem Lagergehäuse 27 abstützt. An der Hohlwelle 26 ist ein Hebel 29 befestigt, und das sich ein Übertragungsglied 28 anschließt, welches eine Verbindung zur Schaltwelle 8 des Getriebes 3 herstellt. In der Hohlwelle 26 ist das z.B. als Welle ausgeführte Schiebeelement 18 gelagert, welches an seinem dem Steuerglied 20 abgekehrten Ende z.B. an einem Umlenkhebel 30 angreift, der mit einem Übertragungsglied 31 verbunden ist, da wiederum gelenkig an der Schaltstange 7 gehalten wird, die direkt an der Schaltmuffe 6 des Vorgeleges 5 angreift.

Bei einer Längsbewegung des Schalthebels 15 in der Schaltgasse 13 oder 14 verdreht sich das Steuerglied 20 auf dem Schiebeelement 18 in Pfeilrichtung 21 und nimmt über die Konsole 24 die Hohlwelle 26 und den Hebel 29 mit, so daß das Übertragungsglied 28 und somit die Gänge P, R, N, D, II und I im Getriebe 3 schaltbar sind.

Bei einer Bewegung des Schalthebels 15 in der Quergasse 16 schwenkt die Konsole 24 um die horizontale Achse 25 und verschiebt das Element 18 in Pfeilrichtung 32, so daß der Umlenkhebel 30 verschwenkt und die Schaltstange 7 die Schaltmuffe 6 im Vorgelege 5 verschiebt und entweder den Straßengang S oder den Geländegang G einschaltet.

Die Stellvorrichtung stellt sicher, daß jeweils nur eine Steuerbewegung, entweder die verschiedenen Gänge oder die Gangart, schaltbar ist. Der Wechsel der Gangart kann somit nur dan erfolgen, wenn das Getriebe in der neutralen Stellung N steht und die Abtriebswelle 4 lastfrei ist.

**Patentansprüche**

1. Einhebelbedienung für ein Schaltgetriebe eines Gleiskettenfahrzeugs, insbesondere für ein automatisches Schaltgetriebe (3) mit Vorgelege (5) zum Umschalten in verschiedene Gangarten und mit einem in zwei Schaltgassen (13, 14) geführten Schalthebel (15), der mit Übertragungsgliedern (28, 31) gekoppelt ist, die zum Vorgelege (5) und zum Schaltgetriebe (3) geführt sind, wobei der Schalthebel (15) mit einer Stellvorrichtung (17) verbunden ist, welche die Schalthebelbewegungen in den beiden Schaltgassen (13, 14) in Steuerbewegungen umsetzt und jeweils nur eine Steuerbewegung, allein und getrennt von der weiteren Steuerbewegung wirkt, dadurch gekennzeichnet, daß der Schalthebel (15) in einer H-förmigen Schaltgasse (13, 14) geführt ist, die im oberen Bereich Vorwärtsfahrstellungen und im unteren durch eine Quergasse (16) getrennten Bereich Rückwärtsfahrstellungen (R) sowie eine Parkstellung (P) aufweist und die mit dem Schalthebel (15) verbundene Stellvorrichtung (17) ein in einer Hohlwelle (26) gelargtes Schiebeelement (18) umfasst, das einerseits mit einem endseitig des Schalthebels (15) gehaltenen und an der Hohlwelle (26) angelenkten Schwenkelement (19) gekoppelt ist und das andererseits mit einem verschwenkbaren Umlenkhebel (30) verbunden ist, der auf ein erstes Übertragungsglied (31) für ein Vorgelege (5) und ein mit der Hohlwelle (26) verbundener Hebel (29) auf ein zweites Übertragungsglied (28) für ein Schaltgetriebe (3) einwirkt.

2. Einhebelbedienung nach Anspruch 1, dadurch gekennzeichnet, daß das Schwenkelement (19) der Stellvorrichtung (17) aud einem endseitig des Schalthebels (15) angeordnetem Steuerglied (20) besteht, das einerseits bei einer Längsverschwenkung des Schalthebels (15) in den Schaltgassen (13 und 14) drehbar auf dem Schiebeelement (18) geführt ist und das andererseits bei einer Querverschiebung des Schalthebels (15) in der Quergasse (16) das Schiebeelement (18) in Axialrichtung (Pfeilrichtung 32) mitnimmt.

3. Einhebelbedienung nach einem oder mehreren der vorhergehenden Ansprüche, dadurch gekennzeichnet, daß das Steuerglied (20) einen in eine Führungsnut (23) des Schiebeelements (18) eingreifenden Zapfen (22) aufweist.

4. Einhebelbedienung nach einem oder mehreren der vorhergehenden Ansprüche, dadurch gekennzeichnet, daß das Steuerglied (20) um eine horizontale Achse (25) schwenkbar an einer Konsole (24) gehalten ist, welche die Hohlwelle (26) trägt.

**Revendications**

1. Commande à un levier pour boîtes de vitesse de véhicule à chenilles, en particulier pour une boîte de vitesses automatique (3) à transmission intermédiaire (5) pour commuter en différents types de vitesse et un levier de vitesse (15) guidé dans deux canaux de commutation (13, 14) et accouplé à des organes de transmission (28, 31) qui sont guidés vers la transmission intermédiaire (5) et vers la boîte de vitesse (3), le levier de vitesse (25) étant relié à un dispositif de réglage (17) qui convertit les mouvements du levier de vitesse effectués dans les deux canaux de commutation (13, 14) en des mouvements de commande et ne provoque chaque fois qu'un mouvement de commande, seul er séparé de l'autre mouvement de commande, caractérisé en ce que le levier de vitesse (15) est guidé dans un canal de commutation (13, 14) en forme de H, qui présente dans la zone supérieure des positions de vitesses avant et dans la zone inférieure, qui est séparée par un canal transversal (16), des positions de vitesses arrière (R), ainsi qu'une position de garage (P) et le dispositif de réglage (17) relié au levier de vitesse (15) comprenant un élément de poussée (18) monté dans un arbre creux (26), qui est accouplé d'un côté à l'élément pivotant (19) maintenu à l'extrémité du levier de vitesse (15) et articulé sur l'arbre creux (26) et qui est relié de l'autre côté à un levier de renvoi (30) pivotant, qui agit sur un premier organe de transmission (31) pour une transmission intermédiaire (5) et sur un levier (29) relié à l'arbre creux (36), sur un deuxième organe de transmission (28), pour une boîte de vitesse (3).

2. Commande à un levier selon la revendication 1, caractérisée en ce que l'élément pivotant (19) du dispositif de réglage (17) se compose d'un organe de commande (20), disposé à une extrémité du levier de vitesse (15) et qui est d'une part guidé tournant sur l'élément de poussée (18), lors d'un pivotement longitudinal du levier de vitesse (15) dans les canaux de commutation (16 et 14), et qui entraîne d'autre part l'élément de poussée (18) en direction axiale (direction de la flèche 32), lors d'un déplacement transversal du levier de poussée (15) dans le canal transversal (16).

3. Commande à un levier selon une ou plusieurs des revendications précédentes, caractérisée en ce que l'organe de commande (20) présente un tourillon (22) s'insérant dans une rainure de guidage (23) de l'élément de poussée (18).

4. Commande à un levier selon une ou plusieurs des revendications précédentes, caractérisée en ce que l'organe de commande (20) est maintenu pivotant autour d'un axe horizontal (25), sur une console (24) qui porte l'arbre creux (26).

**Claims**

1. A single-lever control for a gear-shift transmission of a tracked vehicle, in particular for an automatic gear-shift transmission (3) with a layshaft (5) for changing to different gear speeds and with a gear-shift lever (15) guided in two gear-shift channels (13, 14) and connected to transmission members (28, 31) leading to the layshaft (5) and to the gear-shift transmission (3), the gear-shift lever (15) being connected to a setting device (17) converting the gear-shift lever movements in the two gear-shift channels (13, 14) into control movements, and only one control movement, alone and separate from the other control movement, takes place in each case, characterized in that the gear-shift lever (15) is guided in an H-shaped gear-shift channel (13, 14) having forward drive settings in the upper area and reverse drive settings (R) and a parking setting (P) in the lower area separated by a transverse channel (16), and the setting device (17) connected to the gear-shift lever (15) comprises a displacement element (18) mounted on a hollow shaft (26), the displacement element (18) being coupled at one end to a pivot element (19) held on the end of the gear-shift lever (15) and articulated on the hollow shaft (26) and being connected at the other end to a pivotable changing lever (30) acting upon a first transmission member (31) for a layshaft (5), and a lever (29) connected to the hollow shaft (26) acting upon a second transmission member (28) for a gear-shift transmission (3).

2. A single-lever control according to Claim 1, characterized in that the pivot element (19) of the setting device (17) comprises a control member (20) arranged on the end of the gear-shift lever (15), the control member (20) being rotatably guided at one end on the displacement element (18) during a longitudinal displacement of the gear-shift lever (15) in the gear-shift channels (13 and 14) and entraining at the other end the displacement element (18) in the axial direction (direction of the arrow 32) during a transverse displacement of the gear-shift lever (15) in the transverse channel (16).

3. A single-lever control according to one or more of the preceding Claims, characterized in that the control member (20) comprises a pin (22) engaging in a guide groove (23) of the displacement element (18).

4. A single-lever control according to one or more of the preceding Claims, characterized in that the control member (20) is held on a bracket (24) so as to be pivotable about a horizontal axis (25), the bracket (24) supporting the hollow shaft (26).

FIG.1

FIG.2